# EUROPEAN PATENT SPECIFICATION

(11) **EP 1 498 839 B1**
(45) Date of publication and mention of the grant of the patent: **23.03.2011**
(21) Application number: 04254219.1
(22) Date of filing: 14.07.2004
(51) Int. Cl.: G06K 15/02

(54) **Printing through collaboration of image forming apparatuses**
Ausdruck mittels Zusammenspiel von Bilderzeugungsgeräten
Impression par collaboration d'appareils de formation d'image

(30) Priority: 14.07.2003 JP 2003196720; 11.06.2004 JP 2004174084
(43) Date of publication of application: 19.01.2005
(73) Proprietor: Ricoh Company, Ltd., Tokyo 143-8555 (JP)
(72) Inventor: Moroi, Shohhei, Yokohama-shi Kanagawa (JP)
(74) Representative: Leeming, John Gerard

(56) References cited:
- EP-A- 1 229 436
- US-A1- 2003 086 117

## Description

The present invention generally relates to image forming apparatuses, image forming methods, and image forming systems, and particularly relates to an image forming apparatus, an image forming method, and an image forming system for use in a configuration in which a plurality of image input/output apparatuses are connected together to perform a collaborative printing operation.

In recent years, an image forming apparatus that consolidates a plurality of machine-specific functions such as those of a facsimile machine, a printer, a copier, a scanner, etc., into one device has become widely known. This image forming apparatus (MFP: multifunction peripheral) is provided with a display unit, a print unit, an imaging unit, etc., in one device, and is also provided with four applications corresponding to a facsimile machine, a printer, a copier, and a scanner, respectively. Switching of the applications provides for the image forming apparatus to perform any desired functions of a printer, a copier, a facsimile machine, and a scanner.

In general, MFPs are bulkier compared to printers having only a printing function, and thus require larger installation space. Also, MFPs that operate at high speed and offer sophisticated functions tend to generate large operation noise. Because of this, users tend to dislike having an MFP installed close to their desk spaces in an office environment in which MFPs and PC (personal computers) are connected through a network. If an MFP connected to a network is located at a remote location, however, it requires excess labor and time for users to go to such a location, fetch printouts, and return to their own desks. When a printout contains confidential information that should not be accessed by others, it is not desirable to print to an MFP that is shared and freely accessible by others. It is thus preferable to install a small MFP or printer at each individual's desk space. Cost consideration, however, would prevent such equipment from being provided with functions beyond limited functionality.

In a home office, a satellite office, or a hotspot where access to the Internet is available, how to provide an outputting device such as a printer becomes an issue. When an MFP or a printer needs to be installed at home offices, it is difficult to provide each individual with an image forming apparatus having sophisticated functions due to heavy investment costs that would be required. As a result, the functionality of such equipment needs to be limited to some extent.

In this manner, equipment such as an MFP or printer which is installed at each individual's desk space, each home office, each satellite office, each hotspot, etc., should be provided only minimum-necessary functionality rather than sophisticated functionality, thereby achieving economy. For example, an image forming apparatus provided at each individual's desk space in offices may be configured such that a combine printing function for printing a plurality of size-reduced pages on one paper sheet, a header-&-footer printing function, and a form overlay printing function for printing data overlaid with a separately produced form may be omitted. Moreover, only minimum-necessary font data may be provided, for example.

Even when the functionality of an image forming apparatus is limited, combine printing, for example, can be done by using an MFP or printer having sophisticated functionality connected through a network if combine printing that is not provided becomes necessary. At a home office, a satellite office, or a hotspot, however, it does not make sense to print to a sophisticated apparatus situated at a faraway site. In the offices of a network environment, printing to a sophisticated apparatus situated at a remote location creates the problem of excess labor and time as well as the problem of confidentiality. Namely, even if cost reduction is achieved by limiting the functionality of each image forming apparatus, the convenience of various functions is sacrificed as a consequence of the cost reduction. This simply results in a trivial configuration having a low cost and low functionality.

Accordingly, it is desirable to allow a desired function to be used for printing at an image forming apparatus having limited functionality by delegating the desired function to a sophisticated MFP or printer. A conventional delegated printing function allows a printer different from a selected printer to print when the selected printer cannot print. Also, a parallel printing function is known, by which the printing of a plurality of copies are assigned to a plurality of printers for parallel printing. For example, a plurality of MFPs are connected through a dedicated interface to achieve simultaneous, parallel printing through the transfer of video images, thereby increasing printing speed (e.g., Japanese Patent Application Publication No. 2001-238035). Such delegated printing function and parallel printing function only allow a printing function to be delegated to an image forming apparatus that actually produces a printout. That is, there is no technical concept that a function lacking in an image forming apparatus for producing an actual printout is delegated to another image forming apparatus.

Accordingly, there is a need for an image forming method, and an image forming system for use in a network environment where there is an outputting device having limited functionality, such that a desired function is delegated to a sophisticated image forming apparatus so as to allow the outputting device having limited functionality to produce a printout to which the desired function is applied.

EP 1 229 436 describes an arrangement of network printers and a print manager. The print manager is adapted to process print jobs by distributing the ripping process between two or more different printers, and then returning separately ripped data to a single printer for printing.

It is a general object of the present invention to provide an image forming method, and an image forming system that substantially obviate one or more problems caused by the limitations and disadvantages of the related art.

Features and advantages of the present invention will be presented in the description which follows, and in part will become apparent from the description and the accompanying drawings, or may be learned by practice of the invention according to the teachings provided in the description. Objects as well as other features and advantages of the present invention will be realized and attained by an image forming method, and an image forming system particularly pointed out in the specification in such full, clear, concise, and exact terms as to enable a person having ordinary skill in the art to practice the invention.

According to the present invention there is provided a method of forming an image, an image forming system and a computer program as defined in the appended claims 1, 14 and 22.

According to at least one embodiment of the invention, the use of an image forming apparatus having limited functionality achieves significant cost reduction, yet sophisticate printing using a desired function is made possible at the inexpensive image forming apparatus having limited functionality by delegating the function to another image forming apparatus having sophisticated functionality inclusive of the desired function.

Other objects and further features of the present invention will be apparent from the following detailed description when read in conjunction with the accompanying drawings, in which:
Fig. 1 is an illustrative drawing showing an image forming system according to the present invention;
Fig. 2 is an illustrative drawing showing another example of an image forming system according to the invention;
Fig. 3 is a block diagram showing an example of the construction of an image forming apparatus according to the invention;
Fig. 4 is an illustrative drawing showing an example of the construction of a collaboration processing module;
Fig. 5 is a diagram showing a flow of processes that are performed inside the image forming apparatus shown in Fig. 3 and Fig. 4;
Fig. 6 is an illustrative drawing for explaining rasterize processing and PJL (or XML) creation that are performed to carry out a delegated function;
Figs. 7A through 7C are illustrative drawings for explaining the structure of PJL data;
Fig. 8 is an illustrative drawing showing an example of an XML format;
Fig. 9 is an illustrative drawing showing an example of a unified print data format;
Fig. 10 is an illustrative drawing showing an example of a setting screen that is used when a link between image forming apparatuses is set in a personal computer; and
Fig. 11 is an illustrative drawing showing an example of a screen that is displayed on a personal computer at the time of printing.

In the following, embodiments of the present invention will be described with reference to the accompanying drawings.

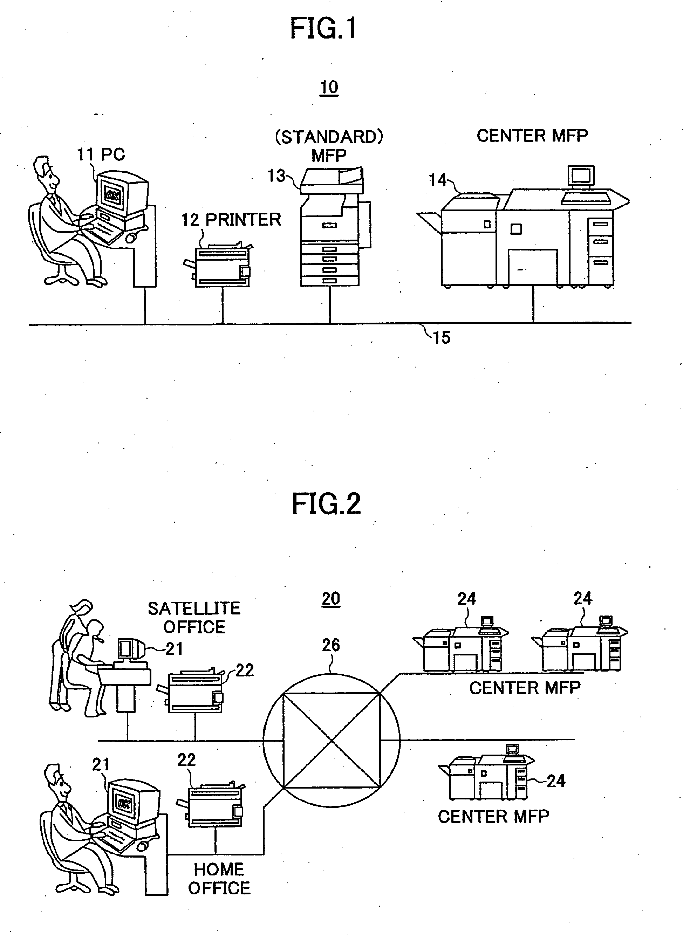

Fig. 1 is an illustrative drawing showing an image forming system according to the present invention. In Fig. 1, an image forming system 10 includes a personal computer (PC) 11, a printer 12 situated in the proximity of the personal computer 11, a standard MFP 13 having standard functionality and the functions of a facsimile, a printer, a copier, a scanner, and the like, a center MFP 14 having sophisticated functionality and provided with a peripheral device having a finishing function and the like, and a LAN (local area network) 15 for connecting these apparatuses together. The printer 12 may be provided with only a printer function, or may be an MFP provided with a facsimile function, a copier function, a scanner function, and the like in addition to the printer function. The printer 12 may generally be provided to each user, and, thus, may be a small-sized, inexpensive device having minimum necessary functionality inclusive of an image printing function for economical consideration.

In the following, a case will be described in which the personal computer 11 requests the printer 12 to print data in the image forming system 10. In the personal computer 11, the printer 12 serving as a local device and the standard MFP 13 serving as a remote device are linked with each other through a setting of printer software. When a user instructs the personal computer 11 to print to the printer 12, the personal computer 11 transmits a command in the PJL (Printer Job Language) or the like and print data to the standard MFP 13 that is linked with the printer 12. The standard MFP 13 decodes the received command given in the PJL or the like, and operates according to the command. Specifically, the standard MFP 13 processes the print data by using a function that is provided in the standard MFP 13 but not provided in the printer 12, for example, and transfers the processed print data to the printer 12. The printer 12 performs a print job by using the processed print data supplied from the standard MFP 13. This provision makes it possible to delegate a desired function to a sophisticated image forming apparatus (standard MFP 13) and to utilize the desired function when printing to the outputting device (printer 12) having limited functionality.

In the printer 12, a combine printing function, a header-&-footer printing function, a form-overlay printing function, and the like may be omitted, for example. Further, the printer 12 may be configured such that font data is not provided. The standard MFP 13 may rasterize (render/draw) print data by use of a desired function such as a combine printing function and desired fonts, for example, followed by transferring the rasterized image data to the printer 12. In this case, all that the printer 12 needs to do is to receive and print the rasterized image data, which eliminates a need for a dedicated ASIC or the like for rasterize.

Printing by delegating a function as described above is viable when the device that actually produces a printout has limited functionality compared with the device that performs the delegated function. It follows that, if the center MFP 14 has more sophisticated functionality than the standard MFP 13, for example, the standard MFP 13 may mapped and linked with the center MFP 14, thereby making it possible to perform the same kind of operation as described above by use of the standard MFP 13 and the center MFP 14. That is, the device that actually produces a printout does not have to be a local printer situated at each user location. Further, although the above description has been given of a case in which an MFP performs a delegated function, such a proxy device is not limited to an MFP, but may be a sophisticated printer that has only a printer function.

Fig. 2 is an illustrative drawing showing another example of an image forming system according to the invention. An image forming system 20 of Fig. 2 includes a personal computer (PC) 21 serving as an image processing device for use by a user at a satellite office or at a home office, a printer 22 situated in the proximity of the personal computer 21, a center MFP 24 having standard or sophisticated functionality and the functions of a facsimile, a printer, a copier, a scanner, and the like, and a network 26 such as the Internet for connecting these apparatuses together. Like the printer 12 of Fig. 1, the printer 22 may be a small-sized, inexpensive device having minimum necessary functionality inclusive of an image printing function for economical consideration.

In the personal computer 21, the printer 22 serving as a local device and the center MFP 24 serving as a remote device are linked with each other through a setting of printer software. When a user instructs the personal computer 21 to print to the printer 22, the personal computer 21 transmits a command in the PJL (Printer Job Language) or the like and print data through the network 26 to the center MFP 24 that is linked with the printer 22. The center MFP 24 processes the print data by using a delegated function, and transfers the processed print data to the printer 22 through the network 26. The printer 22 performs a print job by using the processed print data that is received. This provision makes it possible to delegate a desired function to a sophisticated image forming apparatus (center MFP 24) and to utilize the desired function when printing to the outputting device (printer 22) having limited functionality.

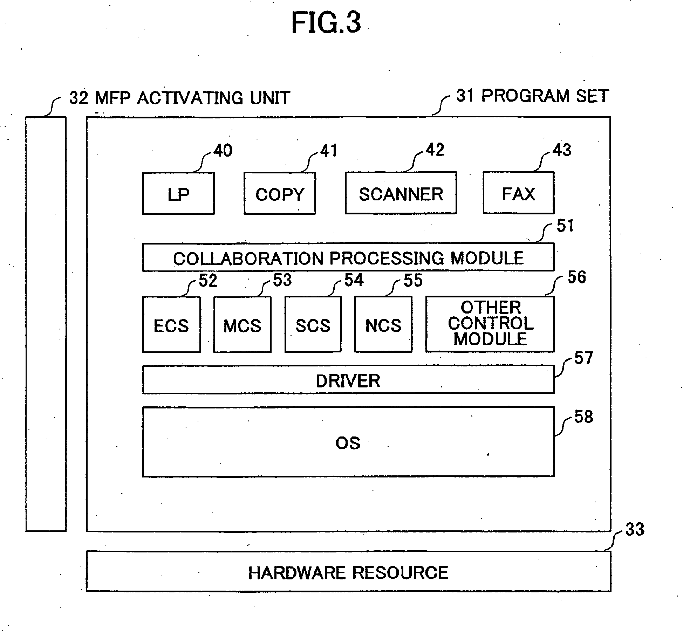

Fig. 3 is a block diagram showing an example of the construction of an image forming apparatus according to the invention. The image forming apparatus of Fig. 3 includes a program set 31, an MFP activating unit 32, and a hardware resource 33. The program set 31 includes an OS 58 that is an operating system such as UNIX (trademark), and further includes application programs, control programs, and a driver 57 running on the OS 58. The application programs include a printer application 40 that is an application for printers, a copy application 41 that is an application for copying, a scanner application 42 that is an application for scanners, and a fax application 43 that is an application for facsimile. The control programs includes a collaboration processing module 51 for performing processes of the invention, an engine control service 52 for controlling printing, a memory control service 53 for controlling memories, a system control service 54 for controlling the system, a network control service 55 for controlling network-related communication or the like, and a control module 56 for other control purposes.

The image forming apparatus exemplified in Fig. 3 is an MFP, which is provided with the printer application 40, the copy application 41, the scanner application 42, and the fax application 43 corresponding to a printer, a copier, a scanner ,and a facsimile machine, respectively. If the image forming apparatus shown in Fig. 3 is a printer having only a printer function, only the printer application 40 is provided as a sole application program.

The MFP activating unit 32 is activated first at the time of power-on of the image forming apparatus, and executes the application programs and control programs. For example, the MFP activating unit 32 retrieves the application programs and control programs from a hard-disk drive or the like, and lays out the retrieved programs in memory for execution. The hardware resource 33 includes a scanner, a plotter, an operation panel, an MLB (media link board), a facsimile, and the like.

The application programs and control programs are executed in parallel as processes on the OS 58.

A process of the engine control service 52 controls engines such as the scanner, the plotter, etc., of the hardware resource 33. A process of the memory control service 53 attends to memory control such as the acquisition and releasing of memory space, the use of a hard-disk drive, etc. A process of the system control service 54 attends to processing such as application management, control-panel control, system-screen display, LED display, hardware resource management, application interruption control, etc. A process of the network control service 55 provides services that are usable by applications in need of a network I/O. This process may distribute data received though various protocols to individual applications, and may act as an intermediary when data is transmitted from individual applications to the network.

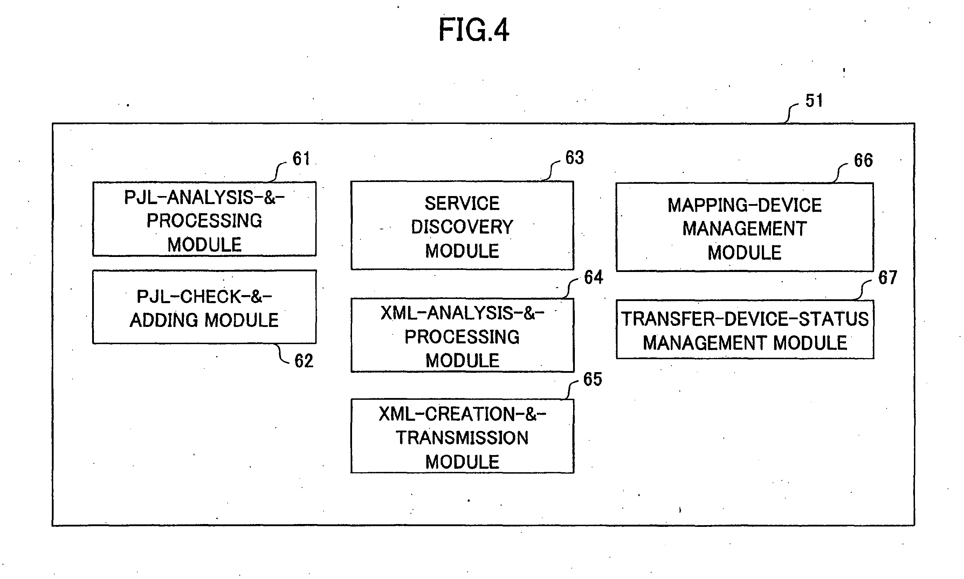

Fig. 4 is an illustrative drawing showing an example of the construction of the collaboration processing module 51. The collaboration processing module 51 of Fig. 4 includes a PJL-analysis-&-processing module 61, a PJL-check-&-adding module 62, a service discovery module 63, an XML-analysis-&-processing module 64, an XML-creation-&-transmission module 65, a mapping-device management module 66, and a transfer-device-status management module 67.

The PJL-analysis-&-processing module 61 analyzes the PJL contained in data supplied from a PC client or another image forming apparatus, and controls a print job. The PJL-check-&-adding module 62 creates the PJL as an instruction to another image forming apparatus to which processed (e.g., rasterized) print data is transferred, such instruction being indicative of print conditions such as an indication that the print data is preprocessed data. The PJL-check-&-adding module 62 attaches the created instruction to the print data. The service discovery module 63 exchanges messages in the XML (eXtensible Markup Language) format according to SOAP (simple Object Access Protocol), which is a communication protocol defining message-data formats, message-processing rules, and the like, thereby acquiring device information about devices on the network. The service discovery module 63 thereby makes it possible to select an image forming apparatus to be mapped (linked) from the network.

The XML-analysis-&-processing module 64 analyzes an XML file that is supplied from a PC client to specify print conditions. The XML-creation-&-transmission module 65 creates XML data as an instruction on print conditions that is used in place of the PJL or in addition to the PJL when the processed (e.g., rasterized) print data is transferred to another image forming apparatus. The XML-creation-&-transmission module 65 further requests transmission. The mapping-device management module 66 manages, in a table format, information about IP addresses and capabilities of other image forming apparatuses mapped to the local apparatus, as well as information about devices on the network that are detected by the service discovery module 63. The transfer-device-status management module 67 attends to status control by, for example, acquiring a result of printing from an image forming apparatus mapped to the local apparatus and acting as a proxy to answer a client PC or the like that issued a request.

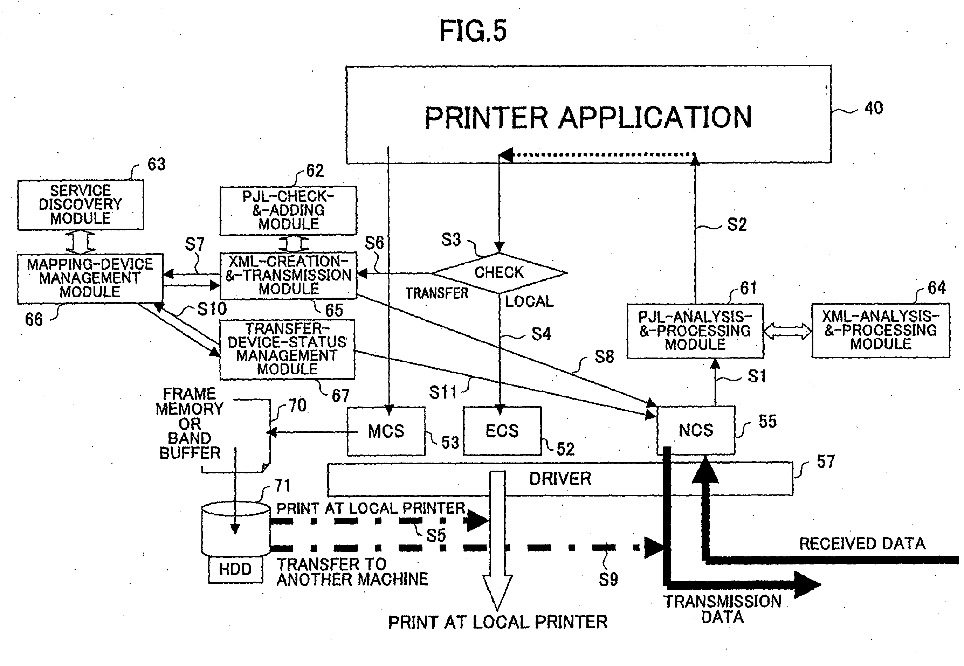

Fig. 5 is a diagram showing a flow of processes that are performed inside the image forming apparatus shown in Fig. 3 and Fig. 4. In Fig. 5, the network control service 55 receives data from an exterior, and transfers the received data to the PJL-analysis-&-processing module 61 (S1). If the data is received and processed by use of SOAP/XML without using the PJL, the received data is transferred to the XML-analysis-&-processing module 64. The PJL-analysis-&-processing module 61 (or XML-analysis-&-processing module 64) analyzes the PJL (or XML) contained in the received data, and checks whether the received data needs to be printed by the local apparatus, or comes from a personal computer (11 or 21 of Fig. 1 or Fig. 2) for transfer to and printing by another image forming apparatus that is specified (12 or 22 of Fig. 1 or Fig. 2). If the data should be transferred to and printed by the specified image forming apparatus, the PJL-analysis-&-processing module 61 (or XML-analysis-&-processing module 64) instructs the printer application 40 to rasterize the print data of the received data for transfer to the specified image forming apparatus (S2). If the received data is data that is transferred from another image forming apparatus, the PJL-analysis-&-processing module 61 (or XML-analysis-&-processing module 64) notifies the printer application 40 that the print data of the received data is pre-rasterized print data (S2).

When an instruction for data transfer to the specified image forming apparatus is received, or when the received data from a personal computer is to be printed by the local apparatus, the printer application 40 rasterizes the print data of the received data to generate image data, and stores the image data in a hard-disk 71 by use of the memory control service 53 and a frame memory or band buffer 70. When receiving a notification indicating that the received data is pre-rasterized, the printer application 40 stores the print data of the received data as it is in the hard-disk 71 by use of the memory control service 53 and the frame memory or band buffer 70.

When the printer application 40 completes the rendering of one-page data or the receipt of one-page rasterized data, subsequent processing differs depending on whether to print to the local apparatus or to transfer the data to another apparatus (S3). If the data is to be printed to the local apparatus, a print request is issued to the engine control service 52 (S4). The engine control service 52 retrieves the print data from the hard-disk 71 via the driver 57 (S5), and supplies the print data to the printer via the driver 57 for printing.

If the data is to be printed to another apparatus, the XML-creation-&-transmission module 65 is called (S6). The XML-creation-&-transmission module 65 collaborates with the PJL-check-&-adding module 62 to create the PJL or XML data for print control that is necessary when the data is transferred to the specified image forming apparatus. For example, rasterize may have been performed according to a PJL or XML instruction indicative of combine printing contained in the received data. In such a case, image data already contains multiple pages on a single sheet, so that there is no need for an instruction for combine printing given to the specified image forming apparatus. If a received PJL or XML instruction indicates printing by use of a first tray or printing by use of stapling, a corresponding PJL or XML instruction also needs to be given to the specified image forming apparatus. The PJL-check-&-addirig module 62 and the XML-creation-&-transmission module 65 create such PJL and XML data.

It creates a problem if a function nonexistent in the specified image forming apparatus is specified in the created PJL or XML data. There is thus a need to check what functions and options are available in the specified image forming apparatus. To this end, an inquiry is made to the mapping-device management module 66 (S7). The mapping-device management module 66 may already have device information in the function table by acquiring in advance such device information about devices on the network by use of the service discovery module 63. Alternatively, the mapping-device management module 66 may acquire device information about devices on the network by use of the service discovery module 63 each time such inquiry is made. The mapping-device management module 66 may update the function table periodically by newly acquiring the device information. In response to the inquiry, the mapping-device management module 66 provides information about what functions and options are available in the specified image forming apparatus.

After creating the PJL or XML data, the XML-creation-&-transmission module 65 inserts, into the beginning of the transmission data, the PJL or XML indicative of the pre-rasterized status of print data together with the PJL or XML data indicative of instruction on print conditions. The XML-creation-&-transmission module 65 transfers the transmission data to the specified image forming apparatus by use of the network control service 55 and the driver 57 (S8).

In some cases, the received data from the client PC may contain the PJL or XML requesting that a result of printing be reported at the completion of printing. In such cases, the transfer-device-status management module 67 acquires the IP address of the specified image forming apparatus from the mapping-device management module 66 (S10), and transmits the PJL or XML requesting a result of printing to the specified image forming apparatus (S11). When receiving a result of printing from the specified image forming apparatus, the transfer-device-status management module 67 notifies the requester such as a client PC of the result of printing.

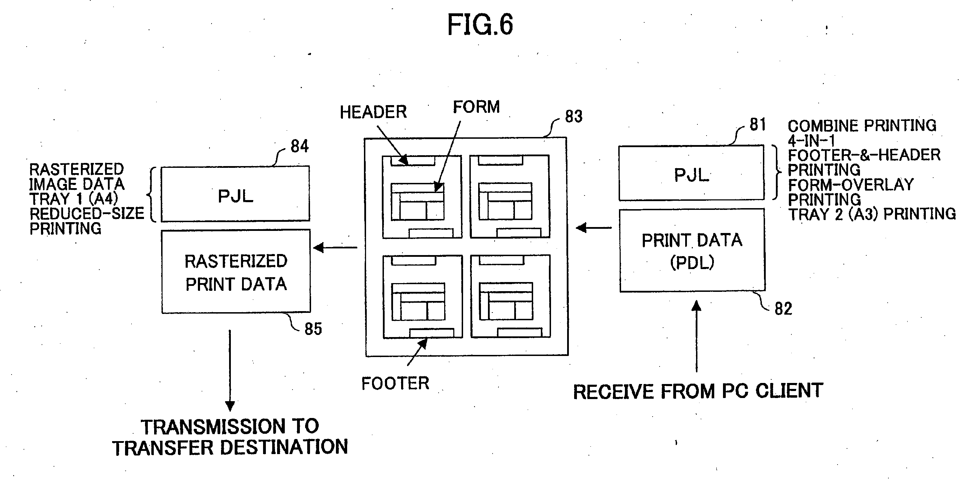

Fig. 6 is an illustrative drawing for explaining rasterize processing and PJL (or XML) creation that are performed to carry out a delegated function. In Fig. 6, the data received from a PC client includes a PJL (or XML) portion 81 and print data 82. Here, the print data may be described in the PDL (Page Description Language). The PJL portion 81 contains instructions for 4-in-1 combine printing, footer-&-header printing, form-overlay printing, and printing by use of an A3-sheet tray 2.

According to analysis by the PJL-analysis-&-processing module 61 (or the XML-analysis-&-processing module 64), the printer application 40 performs rasterize to generate image data 83 by incorporating 4-in-1 combine printing, footer-&-header printing, and form-overlay printing. The PJL-check-&-adding module 62 (or XML-creation-&-transmission module 65) creates and adds a PJL portion 84 to rasterized print data 85 (the same as the image data 83). In this PJL portion 84, there is no need for instructions for 4-in-1 combine printing, footer-&-header printing, and form-overlay printing since the print data 85 is already rasterized. As noted above, the PJL portion 81 of the original received data contains an instruction for printing by use of an A3-sheet tray 2. Despite the instruction, it may turn out that the A4 sheet is a maximum sheet size in the specified image forming apparatus according to the information obtained from the mapping-device management module 66. In this case, the PJL-check-&-adding module 62 (or XML-creation-&-transmission module 65) generates an instruction for size-reduced printing by use of an A4-sheet tray 1, for example, and adds this instruction to the PJL portion 84. The PJL portion 84 and the rasterized print data 85 created in this manner are then transferred to the specified image forming apparatus for printing.

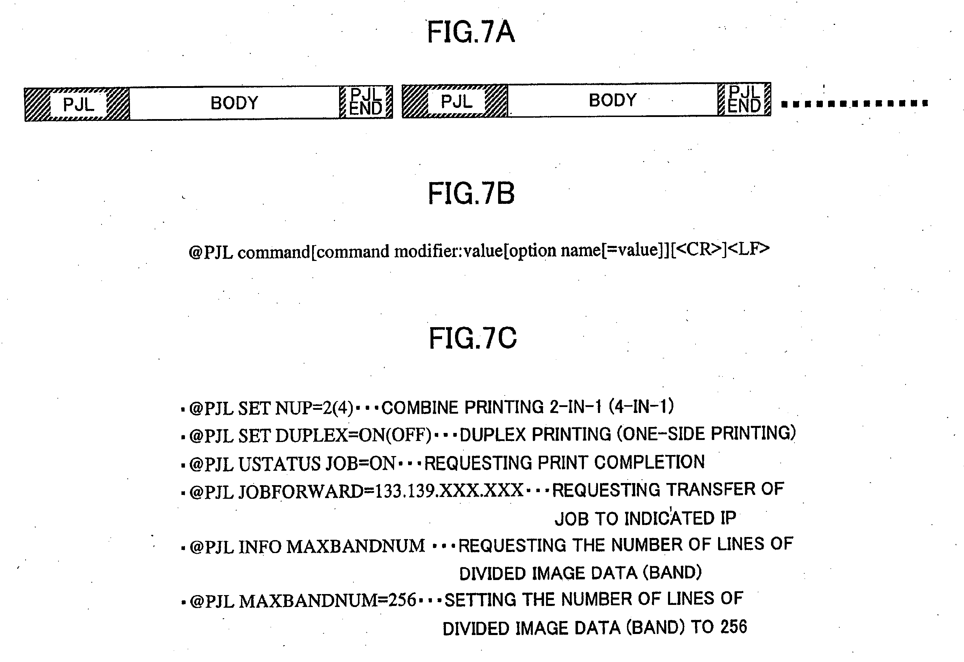

Figs. 7A through 7C are illustrative drawings for explaining the structure of PJL data. As shown in Fig. 7A, each received data item includes a PJL portion at its head position, followed by "BODY" comprised of print data. At the end of the PJL data item is provided "PJLEND". Fig. 7B illustrates a PJL command format. As shown in Fig. 7B, a PJL command is defined as having, if necessary, a command modifier, a numeral value, an option, and a numeral value, which are arranged in a list format. The end of each command is defined by a carriage return CR and a line feed LF. Fig. 7C shows some examples of PJL commands. "@PJL SET NUP=2", for example, is a command that requests combine printing for printing the images of two pages on one sheet. Further, "@PJL JOBFORWARD=133.139.xxx.xxx", for example, is a command that requests the transfer of a print job to the indicated IP address.

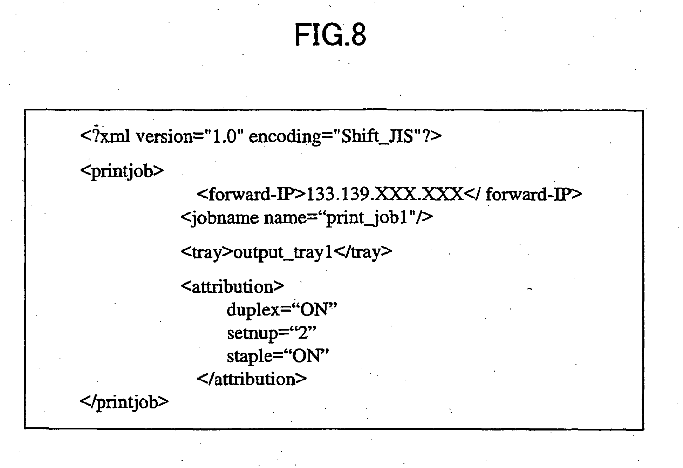

Fig. 8 is an illustrative drawing showing an example of an XML format. The XML as shown in Fig. 8 may be used in place of the PJL shown in Fig. 7A. In the example illustrated in Fig. 8, the transfer of a print job to the indicated IP address 133.139.xxx.xxx, printing by use of a tray 1 (output_tray1), duplex printing (duplex="ON"), 2-in-1 combine printing (setup="2"), and the use of stapling (staple="ON") are requested.

According to at least one embodiment of the invention as described above, an image forming apparatus performs a delegated function to process data in the image forming system as exemplified in Fig. 1 and Fig. 2, and the processed data is transferred to another image forming apparatus for printing, thereby achieving a collaborative printing operation. In such an operation, it is preferable to use a unified print format by unifying the format of transmitted and received data at the time of printing with respect to all the image forming apparatuses usable for the collaboration system as shown in Fig. 1 and Fig. 2. Such a unified print format makes it possible to connect an image forming apparatus to a network without worrying about whether this image forming apparatus complies with the collaboration system. It is further preferable that the unified print format is controllable as to the unit size of drawing at the time of printing depending on the size of memory provided in each image forming apparatus.

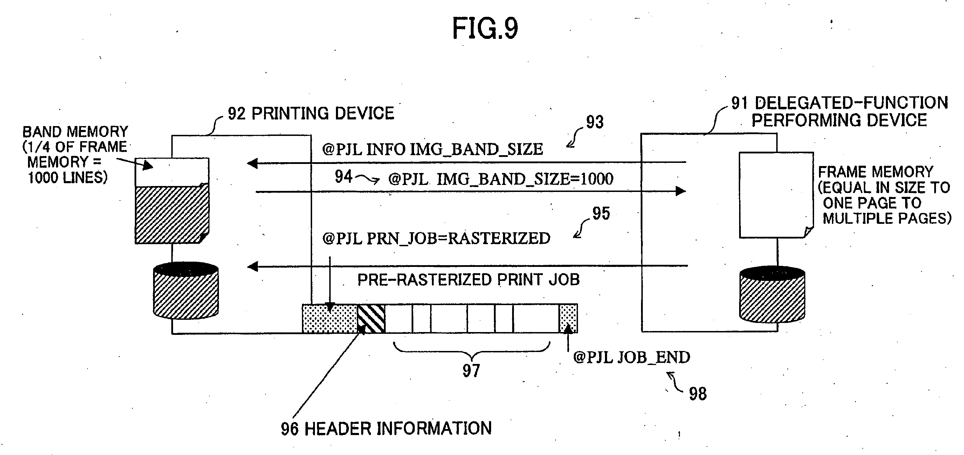

Fig. 9 is an illustrative drawing showing an example of a unified print data format. According to the print format shown in Fig. 9, a delegated-function performing device 91 issues a PJL command 93 requesting the band size of printing to a printing device 92. In response, the printing device 92 sends a PJL command 94 to the delegated-function performing device 91 to inform that the band size is 1000 lines, which is one fourth of the size of a frame memory, for example.

The term "band" refers to each divided area when one page is divided into a plurality of rectangular areas during a printing process. In a printing process, the whole image of one page may not be laid out in memory space, but one page may be divided into a plurality of rectangular areas (bands), followed by laying out images in memory space on an area-by-area basis. A printer which receives and prints pre-rasterized data needs a large memory size if the whole page image is to be laid out in memory space. In consideration of this, one page is divided into bands, and printing is performed with respect to a series of successive images corresponding respective portions, thereby avoiding excessive load on the system.

In the example of Fig. 9, the delegated-function performing device 91 having received information about the band size creates data comprised of a PJL command 95, header information 96, print data 97, and a PJL command 98, and sends the created data to the printing device 92. The PJL command 95 indicates that the print job is pre-rasterized. The header information 96 includes page information inclusive of a page-offset table, band information indicative of the number of lines per band and the number of bands per page, compression information identifying one of MMR, JPEG, a dedicated compression method, and the like, resolution information including a dpi indication, sheet-size information, printing offset information indicative of the position of a top-left corner, etc. The print data 97 is pre-rasterized and compressed on a band-by-band basis according to a predetermined compression method. The PJL command 98 indicates the end of the print job data. In this manner, rasterized data is transferred separately for each band, thereby making it possible to control the unit size of printing depending on the size of memory provided in the image forming apparatus.

The use of a unified print data format as described above provides devices having universal applicability. Further, with the controlling of the unit size of image rendering at the time of printing depending on the size of memory provided in each image forming apparatus, it becomes possible to carry out printing without requiring a large-size memory and without imposing excessive load.

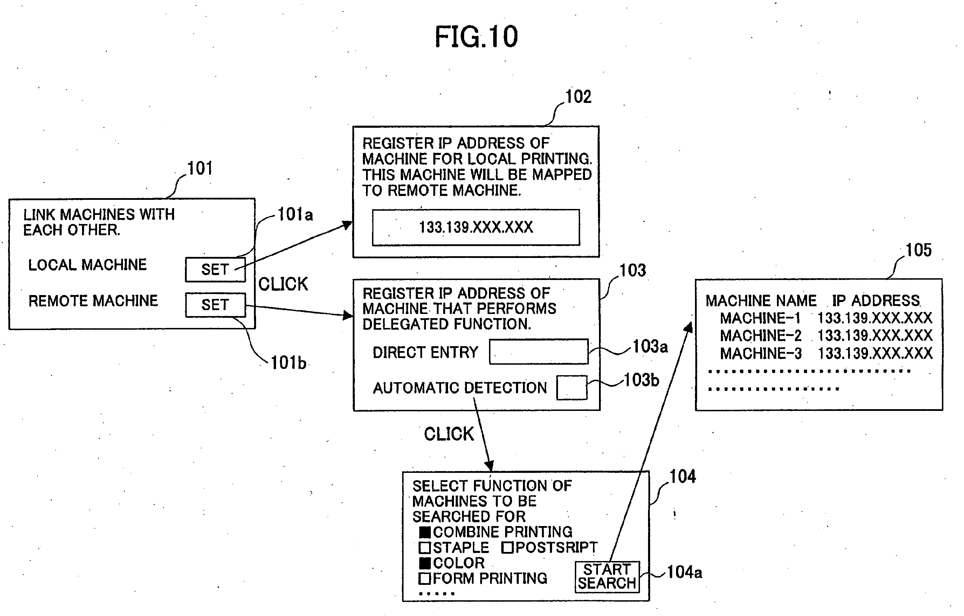

Fig. 10 is an illustrative drawing showing an example of a setting screen that is used when a link between image forming apparatuses is set in a personal computer. In Fig. 10, a screen (or window) 101 is displayed when a process for setting a link between image forming apparatuses is activated as a utility program, for example. When a button 101a for setting a local machine is clicked on the screen 101, a screen 102 will be displayed. On the screen 102, the IP address of a local machine (local printer) is registered, thereby linking (mapping) the local machine with a remote machine.

When a button 101b for setting a remote machine is clicked on the screen 101, a screen 103 will be displayed. On the screen 103, the IP address of a remote machine (remote printer) may directly be entered in an input field 103a, thereby registering the remote machine for performing a delegated function. At this time, an automatic detection button 101b may be clicked to display an automatic detection screen 104. On the automatic detection screen 104, the functions of a desired machine are selected to specify query conditions. In the example of Fig. 10, a combine printing function and a color printing function are selected, thereby making it possible to search for a machine having both the selected functions. A search start button 104a on the automatic detection screen 104 is clicked to perform a search by use of a directory service and/or a service discovery function (SOAP/XML), resulting in a search-result display screen 105 being presented. A machine to be registered as a remote machine is then selected from the machines listed on the search-result display screen 105.

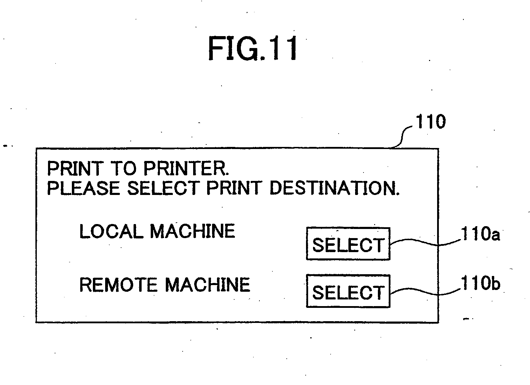

Fig. 11 is an illustrative drawing showing an example of a screen that is displayed on a personal computer at the time of printing. When the personal computer is instructed to print, a print-destination selecting screen 110 as shown in Fig. 11 will be displayed. Clicking a button 110a for selecting the local machine on the print-destination selecting screen 110 results in the local machine being selected as a machine for producing a printout. Since the remote machine registered on the screen 103 shown in Fig. 10 is linked with the local machine in this case, print data together with the PJL or XML is transmitted to the remote machine. The remote machine then performs a process such as a rasterize process by use of a function indicated by the PJL or XML, followed by transferring the processed data to the local machine. This collaborative work makes it possible to have the local machine print the desired print data.

Clicking a button 110b for selecting the remote machine on the print-destination selecting screen 110 results in the remote machine being selected as a machine for producing a printout. In this case, print data is transmitted to the remote machine, and is printed at the remote machine.

According to at least one embodiment of the invention described above, rasterized print data is transferred to the printer 12 or 22 for printing in the construction shown in Fig. 1 or Fig. 2. Accordingly, the printer 12 or 22 does need a dedicated ASIC or the like for rasterize, so that the construction of the printer 12 or 22 can be simplified significantly. In other words, a dumb printer having minimum-necessary functionality to serve as a printer may properly be used as the printer 12 or 22.

Such dumb printer does not need a dedicated ASIC or the like for the rasterize purpose, and, also, does not need a memory for storing font data, a controller for PDL processing, etc. In the configuration shown in Fig. 1 and Fig. 2, therefore, the use of a dumb printer for the printer 12 or 22 achieves significant cost reduction. While achieving significant cost reduction, the performing of a delegated function by another image forming apparatus makes it possible to use sophisticated printing requiring the function of such another image forming apparatus (e.g., the standard MFP 13) when printing to a dumb printer.

In the description of embodiments described above, it is a personal computer that prepares original print data and issues a print request. Alternatively, the source of a print request may be an MFP, a scanner-&-plotter, or the like in stead of a personal computer. In the construction of Fig. 1, for example, the printer 12 may be an MFP, a scanner-&-plotter, or the like. In such a case, the standard MFP 13 may be linked with the printer 12. When image data scanned by the printer 12 is to be printed, the printer 12 sends print data to the linked standard MFP 13 for performing of a delegated function. Thereafter, the printer 12 receives processed print data from the standard MFP 13, and prints the print data.

Further, the present invention is not limited to these embodiments, but various variations and modifications may be made without departing from the scope of the present invention.

## Claims

1. An image forming system, comprising a first image forming apparatus (13, 14, 24) having a predetermined function, a second image forming apparatus (12, 22) lacking the predetermined function, and a network (15, 26) connecting said first image forming apparatus with said second image forming apparatus, **characterized by**
an information processing apparatus (11, 21) having printer software in which said first image forming apparatus and said second image forming apparatus are registered as being linked with each other the printer software being arranged to add to print-purpose data a command requesting a transfer to said second image forming device and to transmit the print-purpose data to said first image forming apparatus through the network when printing to said second image forming apparatus is required;
means in said first image forming apparatus to apply the predetermined function to the print-purpose data to generate print data and to transfer the print data to said second image forming apparatus; and
means in said second image forming apparatus to print said print data.

2. The image forming system as claimed in claim 1, wherein the predetermined function is a rasterize function, and said first image forming apparatus generates the print data as rasterized data.

3. An image forming system according to claim 1 or 2 wherein the predetermined function is a data processing function for use in image printing and the first image forming apparatus (13, 14, 24) comprises:
hardware (33) for image printing;
means for connecting the apparatus to a network (15, 26);
an analysis unit (61) configured to analyze data received from the network; and
a processing unit configured to perform the data processing function according to a result of the analysis by said analysis unit thereby to generate print data from the received data,
a transmission unit (65) to transfer the print data generated by performing the data processing function to the second image forming apparatus (12, 22) that is connected through the network but does not have the data processing function so that the print data can be printed by the second image forming apparatus.

4. The image forming system as claimed in claim 3, wherein the received data includes control data and the print-purpose data, and wherein said analysis unit (61) analyzes the control data of the received data, and said processing unit processes the print-purpose data according to a result of the analysis of the control data by said analysis unit thereby to generate the print data.

5. The image forming system as claimed in claim 4, wherein the control data is provided as at least one of PJL and XML, the print-purpose data is provided as a PDL, and the print data is provided as image data.

6. The image forming system as claimed in claim 3, 4 or 5 wherein said transmission unit (65) generates control data for instructing the second image forming apparatus to perform printing of the print data, and transmits the print data together with the control data to the second forming apparatus.

7. The image forming system as claimed in claim 6, wherein the control data is provided as at least one of PJL and XML, and the print data is provided as image data.

8. The image forming system as claimed in claim 6 or 7, wherein the first image forming apparatus comprises a device-management unit to keep information about functions of the second image forming apparatus, and said transmission unit (65) is arranged to generate the control data in accordance with the information about the functions of the second image forming apparatus obtained from said device-management unit.

9. The image forming system as claimed in claim 8, wherein said device-management unit acquires the information about the functions of the second image forming apparatus through the network.

10. The image forming system as claimed in any one of claims 3 to 9, wherein the transmission unit determines a unit of transmission of the print data in response to a size of memory provided in the second image forming apparatus (12, 22).

11. The image forming system as claimed in 10, wherein said transmission unit (65) requests the second image forming apparatus to report a band size of a printing process, and determines the unit of transmission of the print data in response to the band size reported by the second image forming apparatus (12, 22).

12. The image forming system as claimed in any one of claims 3 to 11, wherein said processing unit prints another data received from the network by use of said hardware according to analysis of the other data performed by said analysis unit.

13. The image forming system as claimed in any one of the preceding claims, wherein the first image forming apparatus comprises a status-management unit arranged to require the second image forming apparatus to send a report on a result of printing of the print data performed by the second image forming apparatus, to receive the report from the second image forming apparatus, and to subsequently transmit contents of the report through the network to a transmission source where the received data originated.

14. A method of forming an image in a network (15, 26) to which a first image forming apparatus (12, 14, 24) having a predetermined function and a second image forming apparatus (12, 22) lacking the predetermined function are connected, comprising the steps of:
transmitting print-purpose data from a print requesting source to said first image forming apparatus (13, 14, 24) through the network; and
applying the predetermined function to the print-purpose data in said first image forming apparatus (13, 14, 24) to generate print data, **characterized by**:
transferring the print data generated by performing the predetermined function from said first image forming apparatus (13, 14, 24) to said second image forming apparatus (12, 22) through the network; and
printing the print data at said second image forming apparatus that lacks the predetermined function.

15. The method as claimed in claim 14, wherein the predetermined function is a rasterize function, and applying the predetermined function generates the print data as rasterized data.

16. The method as claimed in claim 14 or 15, further comprising:
transmitting control data together with the print-purpose data from the print requesting source to said first image forming apparatus (13, 14, 24); and
analyzing the control data in said first image forming apparatus,
wherein the predetermined function is applied to the print-purpose data according to a result of the analysis of the control data thereby to generate the print data.

17. The method as claimed in claim 14, 15 or 16 further comprising:
generating, in said first image forming apparatus, control data for instructing said second image forming apparatus to perform printing of the print data; and
transmitting the print data together with the control data from said first image forming apparatus to said second image forming apparatus,
wherein the print data is printed at said second image forming apparatus in accordance with the control data.

18. The method as claimed in claim 17, further comprising:
having said first image forming apparatus (13, 14, 24) acquire, from said second image forming apparatus (12, 22), information about functions of said second image forming apparatus through the network (15, 26); and
wherein the control data is created in accordance with the information about the functions of said second image forming apparatus.

19. The method as claimed in claim 17 or 18, further comprising:
having said first image forming apparatus (13, 14, 24) require said second image forming apparatus (12, 22) to send a report on a result of printing of the print data performed by said second image forming apparatus; and
receiving, at said first image forming apparatus, the report from said second image forming apparatus, followed by transmitting contents of the report through the network (15, 26) from said first image forming apparatus to the print requesting source.

20. The method as claimed in any one of claims 14 to 19, further comprising determining a unit of transmission of the print data transmitted from said first image forming apparatus to said second image forming apparatus in response to a size of memory provided in said second image forming apparatus.

21. The method as claimed in claim 20, further step comprising having said first image forming apparatus request said second image forming apparatus to report a band size of a printing process, wherein the unit of transmission of the print data is determined in response to the band size reported by said second image forming apparatus.

22. A computer program comprising program code means that, when executed by first and second image forming apparatus and said print requesting source, instructs said first and second image forming apparatus and said print requesting source to effect the method of any one of claims 14 to 21.

## Patentansprüche

1. Bilderzeugungssystem, das eine erste Bilderzeugungsvorrichtung (13, 14, 24) mit einer vorgegebenen Funktion, eine zweite Bilderzeugungsvorrichtung (12, 22), die die vorgegebene Funktion nicht besitzt, und ein Netz (15, 26), das die erste Bilderzeugungsvorrichtung mit der zweiten Bilderzeugungsvorrichtung verbindet, umfasst, **gekennzeichnet durch**
eine Informationsverarbeitungsvorrichtung (11, 21), die Drucker-Software besitzt, in der die erste Bilderzeugungsvorrichtung und die zweite Bilderzeugungsvorrichtung als miteinander verbunden registriert sind, wobei die Drucker-Software dazu ausgelegt ist, zu druckbezogenen Daten einen Befehl hinzuzufügen, der eine Übertragung zu der zweiten Bilderzeugungsvorrichtung und das Senden der druckbezogenen Daten zu der ersten Bilderzeugungsvorrichtung über das Netz anfordert, wenn ein Drucken zu der zweiten Bilderzeugungsvorrichtung erforderlich ist;
Mittel in der ersten Bilderzeugungsvorrichtung, um die vorgegebene Funktion auf die druckbezogenen Daten anzuwenden, um Druckdaten zu erzeugen und um die Druckdaten zu der zweiten Bilderzeugungsvorrichtung zu übertragen; und
Mittel in der zweiten Bilderzeugungsvorrichtung, um die Druckdaten zu drucken.

2. Bilderzeugungssystem nach Anspruch 1, wobei die vorgegebene Funktion eine Rasterbildungsfunktion ist und die erste Bilderzeugungsvorrichtung die Druckdaten als Rasterdaten erzeugt.

3. Bilderzeugungssystem nach Anspruch 1 oder 2, wobei die vorgegebene Funktion eine Datenverarbeitungsfunktion für die Verwendung bei einem Bilddruck ist und die erste Bilderzeugungsvorrichtung (13, 14, 24) umfasst:
Hardware (33) zum Drucken von Bildern;
Mittel zum Verbinden der Vorrichtung mit einem Netz (15, 26);
eine Analyseeinheit (61), die konfiguriert ist, um von dem Netz empfangene Daten zu analysieren; und
eine Verarbeitungseinheit, die konfiguriert ist, um die Datenverarbeitungsfunktion in Übereinstimmung mit einem Ergebnis der Analyse durch die Analyseeinheit auszuführen, um **dadurch** Druckdaten aus den empfangenen Daten zu erzeugen,
eine Übertragungseinheit (65), um die Druckdaten, die durch Ausführen der Datenverarbeitungsfunktion erzeugt werden, zu der zweiten Bilderzeugungsvorrichtung (12, 22) zu übertragen, die mit dem Netz verbunden ist, jedoch die Datenverarbeitungsfunktion nicht besitzt, so dass die Druckdaten durch die zweite Bilderzeugungsvorrichtung gedruckt werden können.

4. Bilderzeugungssystem nach Anspruch 3, wobei die empfangenen Daten Steuerdaten und druckbezogene Daten enthalten und wobei die Analyseeinheit (61) die Steuerdaten der empfangenen Daten analysiert und die Verarbeitungseinheit die druckbezogenen Daten in Übereinstimmung mit einem Ergebnis der Analyse der Steuerdaten durch die Analyseeinheit verarbeitet, um **dadurch** die Druckdaten zu erzeugen.

5. Bilderzeugungssystem nach Anspruch 4, wobei die Steuerdaten als PJL und/oder XML bereitgestellt werden, die druckbezogenen Daten als PDL bereitgestellt werden und die Druckdaten als Bilddaten bereitgestellt werden.

6. Bilderzeugungssystem nach Anspruch 3, 4 oder 5, wobei die Übertragungseinheit (65) Steuerdaten erzeugt, um die zweite Bilderzeugungsvorrichtung anzuweisen, das Drucken der Druckdaten auszuführen, und die Druckdaten zusammen mit den Steuerdaten zu der zweiten Erzeugungsvorrichtung sendet.

7. Bilderzeugungssystem nach Anspruch 6, wobei die Steuerdaten als PJL und/oder XML bereitgestellt werden und die Druckdaten als Bilddaten bereitgestellt werden.

8. Bilderzeugungssystem nach Anspruch 6 oder 7, wobei die erste Bilderzeugungsvorrichtung eine Vorrichtungsmanagement-Einheit umfasst, um Informationen über Funktionen der zweiten Bilderzeugungsvorrichtung zu halten, und die Übertragungseinheit (65) dazu ausgelegt ist, die Steuerdaten in Übereinstimmung mit den Informationen über die Funktionen der zweiten Bilderzeugungsvorrichtung, die von der Vorrichtungsmanagement-Einheit erhalten werden, zu erzeugen.

9. Bilderzeugungssystem nach Anspruch 8, wobei die Vorrichtungsmanagement-Einheit die Informationen über die Funktionen der zweiten Bilderzeugungsvorrichtung über das Netz ermittelt.

10. Bilderzeugungssystem nach einem der Ansprüche 3 bis 9, wobei die Übertragungseinheit eine Einheit für die Übertragung der Druckdaten in Reaktion auf eine Größe eines in der zweiten Bilderzeugungsvorrichtung (12, 22) vorgesehenen Speichers bestimmt.

11. Bilderzeugungssystem nach Anspruch 10, wobei die Übertragungseinheit (65) die zweite Bilderzeugungsvorrichtung auffordert, eine Bandgröße eines Druckprozesses zu berichten, und die Einheit für die Übertragung der Druckdaten in Reaktion auf die durch die zweite Bilderzeugungsvorrichtung (12, 22) berichtete Bandgröße bestimmt.

12. Bilderzeugungssystem nach einem der Ansprüche 3 bis 11, wobei die Verarbeitungseinheit weitere Daten, die von dem Netz empfangen werden, unter Verwendung der Hardware in Übereinstimmung mit der Analyse der anderen Daten, die durch die Analyseeinheit ausgeführt wird, druckt.

13. Bilderzeugungssystem nach einem der vorhergehenden Ansprüche, wobei die erste Bilderzeugungsvorrichtung eine Statusmanagement-Einheit umfasst, die dazu ausgelegt ist, die zweite Bilderzeugungsvorrichtung aufzufordern, einen Bericht über ein Ergebnis des Druckens der Druckdaten, das durch die zweite Bilderzeugungsvorrichtung ausgeführt wird, zu senden, den Bericht von der zweiten Bilderzeugungsvorrichtung zu empfangen und anschließend Inhalte des Berichts über das Netz zu einer Sendequelle zu senden, von der die empfangenen Daten ausgegangen sind.

14. Verfahren zum Erzeugen eines Bildes in einem Netz (15, 26), mit dem eine erste Bilderzeugungsvorrichtung (12, 14, 24) mit einer vorgegebenen Funktion und eine zweite Bilderzeugungsvorrichtung (12, 22), die die vorgegebene Funktion nicht besitzt, verbunden sind, das die folgenden Schritte umfasst:
Senden von druckbezogenen Daten von einer Druckanforderungsquelle zu der ersten Bilderzeugungsvorrichtung (13, 14, 24) über das Netz; und
Anwenden der vorgegebenen Funktion auf die druckbezogenen Daten in der ersten Bilderzeugungsvorrichtung (13, 14, 24), um Druckdaten zu erzeugen, **gekennzeichnet durch**:
Übertragen der Druckdaten, die **durch** Ausführen der vorgegebenen Funktion erzeugt werden, von der ersten Bilderzeugungsvorrichtung (13, 14, 24) zu der zweiten Bilderzeugungsvorrichtung (12, 22) über das Netz; und
Drucken der Druckdaten bei der zweiten Bilderzeugungsvorrichtung, die die vorgegebene Funktion nicht besitzt.

15. Verfahren nach Anspruch 14, wobei die vorgegebene Funktion eine Rasterbildungsfunktion ist und das Anwenden der vorgegebenen Funktion die Druckdaten als gerasterte Daten erzeugt.

16. Verfahren nach Anspruch 14 oder 15, das ferner umfasst:
Senden von Steuerdaten zusammen mit den druckbezogenen Daten von der Druckanforderungsquelle zu der ersten Bilderzeugungsvorrichtung (13, 14, 24); und
Analysieren der Steuerdaten in der ersten Bilderzeugungsvorrichtung,
wobei die vorgegebene Funktion auf die druckbezogenen Daten in Übereinstimmung mit einem Ergebnis der Analyse der Steuerdaten angewendet wird, um **dadurch** die Druckdaten zu erzeugen.

17. Verfahren nach Anspruch 14, 15 oder 16, das ferner umfasst:
Erzeugen von Steuerdaten zum Anweisen der zweiten Bilderzeugungsvorrichtung, das Drucken der Druckdaten auszuführen, in der ersten Bilderzeugungsvorrichtung; und
Senden der Druckdaten zusammen mit den Steuerdaten von der ersten Bilderzeugungsvorrichtung zu der zweiten Bilderzeugungsvorrichtung,
wobei die Druckdaten bei der zweiten Bilderzeugungsvorrichtung in Übereinstimmung mit den Steuerdaten gedruckt werden.

18. Verfahren nach Anspruch 17, das ferner umfasst:
Veranlassen der ersten Bilderzeugungsvorrichtung (13, 14, 24), von der zweiten Bilderzeugungsvorrichtung (12, 22) Informationen über Funktionen der zweiten Bilderzeugungsvorrichtung über das Netz (15, 26) zu ermitteln; und
wobei die Steuerdaten in Übereinstimmung mit den Informationen über die Funktionen der zweiten Bilderzeugungsvorrichtung erzeugt werden.

19. Verfahren nach Anspruch 17 oder 18, das ferner umfasst:
Veranlassen der ersten Bilderzeugungsvorrichtung (13, 14, 24), die zweite Bilderzeugungsvorrichtung (12, 22) dazu aufzufordern, einen Bericht über ein Ergebnis des Druckens der Druckdaten, das durch die zweite Bilderzeugungsvorrichtung ausgeführt wird, zu senden; und
Empfangen des Berichts von der zweiten Bilderzeugungsvorrichtung bei der ersten Bilderzeugungsvorrichtung, gefolgt vom Senden von Inhalten des Berichts über das Netz (15, 26) von der ersten Bilderzeugungsvorrichtung zu der ein Drucken anfordernden Quelle.

20. Verfahren nach einem der Ansprüche 14 bis 19, das ferner das Bestimmen einer Einheit für die Übertragung von Druckdaten, die von der ersten Bilderzeugungsvorrichtung zu der zweiten Bilderzeugungsvorrichtung gesendet werden, in Reaktion auf eine Größe eines in der zweiten Bilderzeugungsvorrichtung vorgesehenen Speichers umfasst.

21. Verfahren nach Anspruch 20, das ferner den Schritt umfasst, die erste Bilderzeugungsvorrichtung dazu zu veranlassen, die zweite Bilderzeugungsvorrichtung aufzufordern, eine Bandgröße eines Druckprozesses zu berichten, wobei die Einheit für die Übertragung der Druckdaten in Reaktion auf die durch die zweite Bilderzeugungsvorrichtung berichtete Bandgröße bestimmt wird.

22. Computerprogramm, das Programmcodemittel enthält, die dann, wenn sie durch die erste und die zweite Bilderzeugungsvorrichtung und die ein Drucken anfordernde Quelle ausgeführt werden, die erste und die zweite Bilderzeugungsvorrichtung und die ein Drucken anfordernde Quelle auffordern, das Verfahren nach einem der Ansprüche 14 bis 21 auszuführen.

## Revendications

1. Système de formation d'image, comprenant un premier appareil de formation d'image (13, 14, 24) ayant une fonction prédéterminée, un second appareil 1 de formation d'image (12, 22) ne disposant pas de la fonction prédéterminée, et un réseau (15, 26) connectant ledit premier appareil de formation d'image avec ledit second appareil de formation d'image, **caractérisé par**
un appareil de traitement d'informations (11, 21) ayant un logiciel d'imprimante dans lequel ledit premier appareil de formation d'image et ledit second appareil de formation d'image sont enregistrés comme étant reliés l'un avec l'autre, le logiciel d'imprimante étant agencé pour ajouter à des données destinées à être imprimées une commande demandant un transfert audit second appareil de formation d'image et pour transmettre les données destinées à être imprimées audit premier appareil de formation d'image par l'intermédiaire du réseau lorsque l'impression sur ledit seconde appareil de formation d'image est requise ;
un moyen dans ledit premier appareil de formation d'image pour appliquer la fonction prédéterminée aux données destinées à être imprimées afin de générer des données d'impression et pour transférer les données d'impression audit second appareil de formation d'image ; et
un moyen dans ledit second appareil de formation d'image pour imprimer lesdites données d'impression.

2. Système de formation d'image selon la revendication 1, dans lequel la fonction prédéterminée est une fonction rastériser, et ledit premier appareil de formation d'image génère les données d'impression comme des données rastérisées.

3. Système de formation d'image selon la revendication 1 ou 2, dans lequel la fonction prédéterminée est une fonction de traitement de données destinée à être utilisée dans l'impression d'image et le premier appareil de formation d'image (13, 14, 24) comprend :
un matériel (33) pour l'impression d'image ;
un moyen pour connecter l'appareil à un réseau (15, 26) ;
une unité d'analyse (61) configurée pour analyser des données reçues en provenance du réseau ; et
une unité de traitement configurée pour effectuer la fonction de traitement de données selon un résultat de l'analyse par ladite unité d'analyse afin de générer ainsi des données d'impression à partir des données reçues,
une unité de transmission (65) pour transférer les données d'impression générées en effectuant la fonction de traitement de données au second appareil de formation d'image (12, 22) qui est connecté par l'intermédiaire du réseau mais n'a pas la fonction de traitement de données de sorte que les données d'impression puissent être imprimées par le second appareil de formation d'image.

4. Système de formation d'image selon la revendication 3, dans lequel les données reçues incluent des données de commande et les données destinées à être imprimées, et dans lequel ladite unité d'analyse (61) analyse les données de commande des données reçues, et ladite unité de traitement traite les données destinées à être imprimées selon un résultat de l'analyse des données de commande par ladite unité d'analyse afin de générer ainsi les données d'impression.

5. Système de formation d'image selon la revendication 4, dans lequel les données de commande sont fournies comme au moins un de PJL et XML, les données destinées à être imprimées sont fournies comme un PDL, et les données d'impression sont fournies comme des données d'image.

6. Système de formation d'image selon la revendication 3, 4 ou 5, dans lequel ladite unité de transmission (65) génère des données de commande pour donner pour instruction au second appareil de formation d'image d'effectuer l'impression des données d'impression, et transmet les données d'impression conjointement avec les données de commande au second appareil de formation d'image.

7. Système de formation d'image selon la revendication 6, dans lequel les données de commande sont fournies comme au moins un de PJL et XML, et les données d'impression sont fournies comme des données d'image.

8. Système de formation d'image selon la revendication 6 ou 7, dans lequel le premier appareil de formation d'image comprend une unité de gestion de dispositif pour conserver des informations concernant des fonctions du second appareil de formation d'image, et ladite unité de transmission (65) est agencée pour générer les données de commande conformément aux informations concernant les fonctions du second appareil de formation d'image obtenues à partir de ladite unité de gestion de dispositif.

9. Système de formation d'image selon la revendication 8, dans lequel ladite unité de gestion de dispositif acquiert les informations concernant les fonctions du second appareil de formation d'image par l'intermédiaire du réseau.

10. Système de formation d'image selon l'une quelconque des revendications 3 à 9, dans lequel l'unité de transmission détermine une unité de transmission des données d'impression en réponse à une taille de mémoire fournie dans le second appareil de formation d'image (12, 22).

11. Système de formation d'image selon la revendication 10, dans lequel ladite unité de transmission (65) demande au second appareil de formation d'image de rapporter une taille de bande d'un processus d'impression, et détermine l'unité de transmission des données d'impression en réponse à la taille de bande rapportée par le second appareil de formation d'image (12, 22).

12. Système de formation d'image selon l'une quelconque des revendications 3 à 11, dans lequel ladite unité de traitement imprime d'autres données reçues en provenance du réseau en utilisant ledit matériel selon l'analyse des autres données effectuée par ladite unité d'analyse.

13. Système de formation d'image selon l'une quelconque des revendications précédentes, dans lequel le premier appareil de formation d'image comprend une unité de gestion d'état agencée pour demander au second appareil de formation d'image d'envoyer un rapport sur un résultat d'impression des données d'impression effectué par le second appareil de formation d'image, pour recevoir le rapport en provenance du second appareil de formation d'image, et pour transmettre par la suite le contenu du rapport par l'intermédiaire du réseau à une source de transmission de laquelle proviennent les données reçues.

14. Procédé de formation d'une image dans un réseau (15, 26) auquel un premier appareil de formation d'image (12, 14, 24) ayant une fonction prédéterminée et un second appareil de formation d'image (12, 22) ne disposant pas de la fonction prédéterminée sont connectés, comprenant les étapes consistant à :
transmettre des données destinées à être imprimées d'une source demandant l'impression audit premier appareil de formation d'image (13, 14, 24) par l'intermédiaire du réseau ; et
appliquer la fonction prédéterminée aux données destinées à être imprimées dans ledit premier appareil de formation d'image (13, 14, 24) afin de générer des données d'impression, **caractérisé par** :
le transfert des données d'impression générées en effectuant la fonction prédéterminée dudit premier appareil de formation d'image (13, 14, 24) audit second appareil de formation d'image (12, 22) par l'intermédiaire du réseau ; et
l'impression des données d'impression au niveau dudit second appareil de formation d'image qui ne dispose pas de la fonction prédéterminée.

15. Procédé selon la revendication 14, dans lequel la fonction prédéterminée est une fonction rastériser, et l'application de la fonction prédéterminée génère les données d'impression comme des données rastérisées.

16. Procédé selon la revendication 14 ou 15, comprenant en outre :
la transmission de données de commande conjointement avec les données destinées à être imprimées de la source demandant l'impression audit premier appareil de formation d'image (13, 14, 24) ; et
l'analyse des données de commande dans ledit premier appareil de formation d'image,
dans lequel la fonction prédéterminée est appliquée aux données destinées à être imprimées selon un résultat de l'analyse des données de commande afin de générer ainsi les données d'impression.

17. Procédé selon la revendication 14, 15 ou 16, comprenant en outre :
la génération, dans ledit premier appareil de formation d'image, de données de commande pour donner pour instruction audit second appareil de formation d'image d'effectuer l'impression des données d'impression ; et
la transmission des données d'impression conjointement avec les données de commande dudit premier appareil de formation d'image audit second appareil de formation d'image,
dans lequel les données d'impression sont imprimées au niveau dudit second appareil de formation d'image conformément aux données de commande.

18. Procédé selon la revendication 17, comprenant en outre :
l'acquisition par ledit premier appareil de formation d'image (13, 14, 24), à partir dudit second appareil de formation d'image (12, 22), d'informations concernant des fonctions dudit second appareil de formation d'image par l'intermédiaire du réseau (15, 26) ; et
dans lequel les données de commande sont créées conformément aux informations concernant les fonctions dudit second appareil de formation d'image.

19. Procédé selon la revendication 17 ou 18, comprenant en outre :
la demande par ledit premier appareil de formation d'image (13, 14, 24) audit second appareil de formation d'image (12, 22) d'envoi d'un rapport sur un résultat d'impression des données d'impression effectué par ledit second appareil de formation d'image ; et
la réception, au niveau dudit premier appareil de formation d'image, du rapport en provenance dudit second appareil de formation d'image, suivie de la transmission du contenu du rapport par l'intermédiaire du réseau (15, 26) dudit premier appareil de formation d'image à la source demandant l'impression.

20. Procédé selon l'une quelconque des revendications 14 à 19, comprenant en outre la détermination d'une unité de transmission des données d'impression transmises dudit premier appareil de formation d'image audit second appareil de formation d'image en réponse à une taille de mémoire fournie dans ledit second appareil de formation d'image.

21. Procédé selon la revendication 20, comprenant en outre la demande par ledit premier appareil de formation d'image audit second appareil de formation d'image de rapport d'une taille de bande d'un processus d'impression, dans lequel l'unité de transmission des données d'impression est déterminée en réponse à la taille de bande rapportée par ledit second appareil de formation d'image.

22. Programme informatique comprenant un moyen de code de programme qui, lorsqu'il est exécuté par un premier et un second appareil de formation d'image et ladite source demandant l'impression, donne pour instruction audit premier et audit second appareil de formation d'image et à ladite source demandant l'impression d'effectuer le procédé de l'une quelconque des revendications 14 à 21.
